# EUROPÄISCHE PATENTSCHRIFT

(11) **EP 2 354 570 B1**
(45) Veröffentlichungstag und Bekanntmachung des Hinweises auf die Patenterteilung: **06.08.2014**
(21) Anmeldenummer: 11152453.4
(22) Anmeldetag: 28.01.2011
(51) Int. Cl.: F16B 21/07

(54) **Steckhalterung für einen oberen Befestigungspunkt eines hängend montierbaren Bauteils**
Connection holder for an upper fixing point of a suspended component
Support de prise pour un point de fixation supérieur d'un composant pouvant être monté de manière suspendue

(30) Priorität: 29.01.2010 DE 102010000260
(43) Veröffentlichungstag der Anmeldung: 10.08.2011
(73) Patentinhaber: SFS intec Holding AG, 9435 Heerbrugg (CH)
(72) Erfinder: Costabel, Sascha, 75443, Ötisheim (DE)

(56) Entgegenhaltungen:
- DE-U1- 29 920 497
- US-A- 2 464 924
- US-A1- 2009 321 574

## Beschreibung

Die Erfindung betrifft eine Steckhalterung für einen oberen Befestigungspunkt eines an einer festen Struktur wie der eines Flugzeuges hängend montierbaren Bauteils, mit einem Gehäuse mit einer Öffnung, die eine Mittelachse hat, und mit einem Haltebolzen des Bauteils mit einem mit einer Nut versehenen Ende, das in das Gehäuse einführbar und darin lösbar verriegelbar ist.

Bei einer bekannten Steckhalterung dieser Art (DE 299 20 497 U1) hat der Haltebolzen an einem Ende einen Werkzeugangriff. Zum Verriegeln und Entriegeln der Befestigung ist der Haltebolzen mit Hilfe eines Schraubendrehers jeweils um 90° drehbar. Dabei werden die Enden von in zwei Nuten des Haltebolzens eingreifenden Blattfedern einer Haltefederanordnung an dem Haltebolzen eingerastet bzw. auseinandergespreizt. In der entriegelten Position kann der Haltebolzen samt Bauteil aus der Haltefederanordnung herausgezogen werden. Um das Bauteil wieder zu befestigen, wird der Haltebolzen, der eine keilförmige Spitze hat, mit der Schmalseite der Spitze zwischen die sich dabei spreizenden Blattfederenden geschoben, bis diese schließlich in die Nuten am Ende des Haltebolzens einrasten. Diese Steckhalterung ist nur dann einsetzbar, wenn der Werkzeugangriff des Haltebolzens ohne weiteres zugänglich ist. Das ist aber nicht immer der Fall.

Aufgabe der Erfindung ist es, bei einer Steckhalterung der eingangs genannten Art das Verriegeln und Entriegeln zu vereinfachen.

Diese Aufgabe ist erfindungsgemäß dadurch gelöst, dass die Öffnung schräg in dem Gehäuse unter einem spitzen Winkel gegen die Senkrechte angeordnet und so ausgebildet ist, dass zur Montage des Bauteils der Haltebolzen wenigstens in Richtung der Mittelachse in die Öffnung einführbar und durch Abstützung an einem ersten Randteil der Öffnung in die Senkrechte schwenkbar ist zum Verriegeln des Haltebolzens durch einen in die Nut einfassenden zweiten, gegenüberliegenden Randteil der Öffnung und dass zur Demontage des Bauteils der Haltebolzen um den zweiten Randteil in die Mittelachse schwenkbar und dann aus der Öffnung herausziehbar ist.

Bei der Steckhalterung nach der Erfindung erfolgen somit eine selbstständige Verriegelung des Haltebolzens bei dessen Montage durch das Verschwenken desselben in die Senkrechte und eine selbstständige Entriegelung bei der Demontage durch das Verschwenken des Haltebolzens in die Mittelachse der Öffnung, in welcher der Haltebolzen in die Öffnung eingeführt worden ist.

Vorteilhafte Ausgestaltungen der Erfindung bilden die Gegenstände der Unteransprüche.

In einer Ausgestaltung der Steckhalterung nach der Erfindung weist der zweite Randteil ein Federelement auf, das so ausgebildet und so in dem Gehäuse befestigt ist, dass es bei der Montage des Bauteils durch dessen in der Senkrechten statt in der Mittelachse in das Gehäuse eingeführten Haltebolzen auslenkbar ist, um schließlich in die Nut einzurasten. Da in dieser Ausgestaltung das Federelement in der Einführrichtung des Haltebolzens auslenkbar ist, kann die Montage des Bauteils erfolgen, während der Haltebolzen in der Senkrechten ist. Zur Demontage des Bauteils wird der Haltebolzen in die Mittelachse der Öffnung geschwenkt, wobei das Federelement die Nut des Haltebolzens verlässt, so dass dieser in der Mittelachse aus der Öffnung herausgezogen werden kann. Die Entriegelung erfolgt somit wiederum selbstständig, indem einfach das Bauteil mit dem Haltebolzen verschwenkt wird.

In einer weiteren Ausgestaltung der Steckhalterung nach der Erfindung ist der zweite Randteil des Gehäuses der Querschnittsform der Nut des Haltebolzens angepasst. Dadurch ist gewährleistet, dass der zweite Randteil spielfrei in die Nut des Haltebolzens einrasten kann.

In einer weiteren Ausgestaltung der Steckhalterung nach der Erfindung ist das Federelement eine Blattfeder, deren freies Ende der Querschnittsform der Nut des Haltebolzens angepasst ist. Auch in diesem Fall wird der Haltebolzen nach dem Einrasten des Federelements in dessen Nut spielfrei festgehalten.

In einer weiteren Ausgestaltung der Steckhalterung nach der Erfindung stützt sich das Federelement auf der Seite der Öffnung, auf der der Haltebolzen bei der Montage eingeführt wird, auf einem Gehäusevorsprung ab, der weiter so ausgebildet ist, dass er nach der Montage des Haltebolzens diesen seitlich abstützt. Dadurch ist sicherer gewährleistet, dass bei hängend montiertem Bauteil der Haltebolzen seine Lage in der Senkrechten beibehält.

In einer weiteren Ausgestaltung der Steckhalterung nach der Erfindung beträgt der spitze Winkel bis zu 20°. Ein Winkel um 20° wird bevorzugt und ist ausreichend, um die Rastverbindung zwischen dem zweiten Randteil der Öffnung oder dem Federelement herzustellen oder zu lösen.

In einer weiteren Ausgestaltung der Steckhalterung nach der Erfindung ist das Gehäuse ein Formteil, das mittels Schrauben oder mittels Tragkonsolen, die in Halterungen an einer senkrechten Wand der Struktur einrastbar sind, an der Struktur lösbar befestigbar oder befestigt ist. Der Befestigungspunkt für ein hängend montiertes Bauteil kann somit nach Bedarf gewählt werden, indem das Gehäuse an die Struktur angeschraubt wird oder einfach mit seinen Tragkonsolen in unter einer Vielzahl von an einer senkrechten Wand der festen Struktur vorgesehenen Halterungen ausgewählte Halterungen eingerastet wird.

In einer weiteren Ausgestaltung der Steckhalterung nach der Erfindung ist an dem Gehäuse unterhalb der Öffnung eine Spannfläche ausgebildet, die mit der Senkrechten einen rechten Winkel oder einen kleineren Winkel bildet. Diese Spannfläche kann als ein Widerlager für das Bauteil benutzt werden, um dieses in seiner hängend montierten Stellung zu sichern.

In einer weiteren Ausgestaltung der Steckhalterung nach der Erfindung ist auf dem anderen Ende des Haltebolzens ein elastisch federndes Dämpfungselement so angebracht, dass es in der senkrechten Stellung des Haltebolzens gegen die Spannfläche drückt. Die Verbindung zwischen dem Haltebolzen und dem Gehäuse wird so über das elastisch federnde Dämpfungselement vorgespannt, um ein Klappern zu verhindern.

In einer weiteren Ausgestaltung der Steckhalterung nach der Erfindung ist die lichte Weite des Gehäuses zwischen seinen beiden einander gegenüberliegenden Seitenwänden größer als der Außendurchmesser des Haltebolzens. Das Gehäuse der Steckhalterung ermöglicht somit einen Toleranzausgleich durch einen Floatingbereich in Richtung quer zu den Seitenwänden des Gehäuses.

Ausführungsbeispiele der Erfindung werden im Folgenden unter Bezugnahme auf die Zeichnungen näher beschrieben. Es zeigt
- Fig. 1: in einer Schnittansicht eine Steckhalterung nach der Erfindung, in welcher ein Haltebolzen in der Senkrechten vor dem Einführen in ein Gehäuse der Steckhalterung gezeigt ist,
- Fig. 2: die Steckhalterung nach Fig. 1, nachdem der Haltebolzen in das Gehäuse eingeführt und darin verriegelt worden ist, wobei zusätzlich ein mit dem Haltebolzen verbundenes Bauteil angedeutet ist,
- Fig. 3: die Steckhalterung nach den Fig. 1 und 2 in einem Zustand, in welchem der Haltebolzen in eine Mittelachse der Öffnung verschwenkt und dadurch entriegelt worden ist,
- Fig. 4: die Steckhalterung nach Fig. 3 in einem Zustand, in welchem der Haltebolzen in der Mittelachse der Öffnung aus dem Gehäuse herausgezogen worden ist,
- Fig. 5: eine weitere Ausführungsform der Steckhalterung nach der Erfindung, bei welcher statt eines Federelements ein zweiter Randteil der Öffnung des Gehäuses in die Nut des Haltebolzens einrastbar ist,
- Fig. 6: als eine Einzelheit das Gehäuse der Steckhalterung in einer Seitenansicht,
- Fig. 7: eine Schnittansicht des Gehäuses nach der Linie VII-VII in Fig. 6,
- Fig. 8: das Gehäuse nach Fig. 6 in Draufsicht und
- Fig. 9: das Gehäuse nach Fig. 6 in einer Schnittansicht nach der Linie IX-IX in Fig. 8.

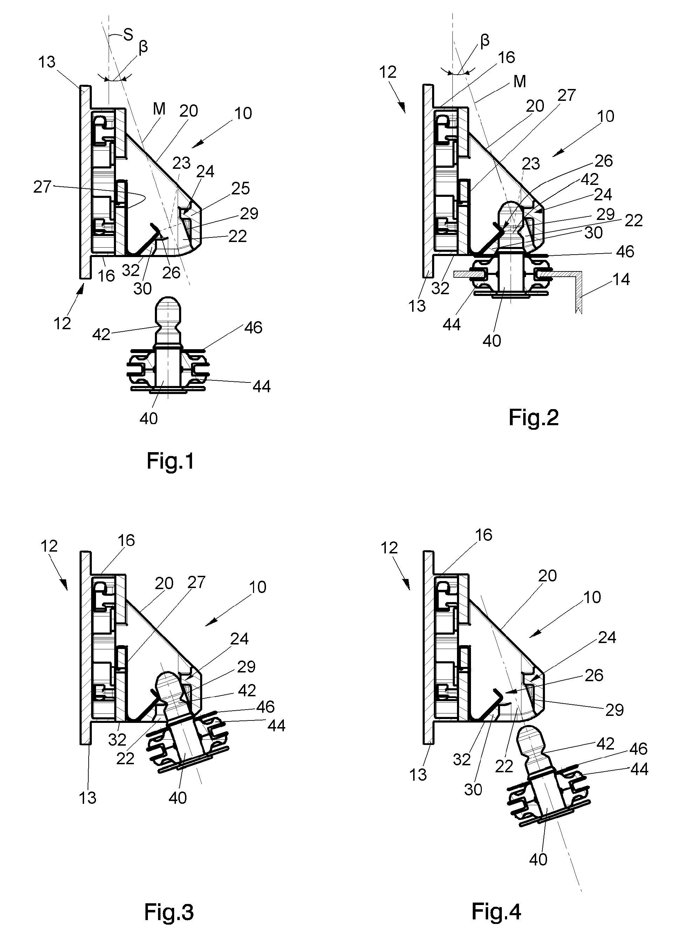

In den Fig. 1 - 4 und 6 - 9 ist eine insgesamt mit 10 bezeichnete Steckhalterung als ein erstes Ausführungsbeispiel der Erfindung dargestellt. Die Steckhalterung 10 bildet einen oberen Befestigungspunkt eines an einer festen Struktur 12 wie der eines Flugzeuges hängend montierbaren Bauteils 14, bei dem es sich, wenn die Struktur 12 die eines Flugzeuges ist, in dem hier beschriebenen Ausführungsbeispiel um ein Seitenwandpanel handelt. Das Bauteil 14 ist lediglich in Fig. 2 angedeutet. Die Steckhalterung 10 umfasst ein Gehäuse 20 und einen Haltebolzen 40 des Bauteils 14. Das Gehäuse 20 hat eine sich nach unten erweiternde Öffnung 22, die an einer Stelle 23, an der sie ihre kleinste lichte Weite hat, so bemessen ist, dass der Haltebolzen 40 gerade hindurchführbar ist. An der Stelle 23 kleinster lichter Weite erstreckt sich der Querschnitt der Öffnung in einer Ebene, zu der eine Mittelachse M der Öffnung 22 rechtwinkelig ist, wie es in Fig. 1 gezeigt ist. Die Mittelachse M bildet mit der Senkrechten, die in den Zeichnungen mit S bezeichnet ist, einen spitzen Winkel β. Der spitze Winkel β beträgt bis zu 20° und vorzugsweise um die 20°.

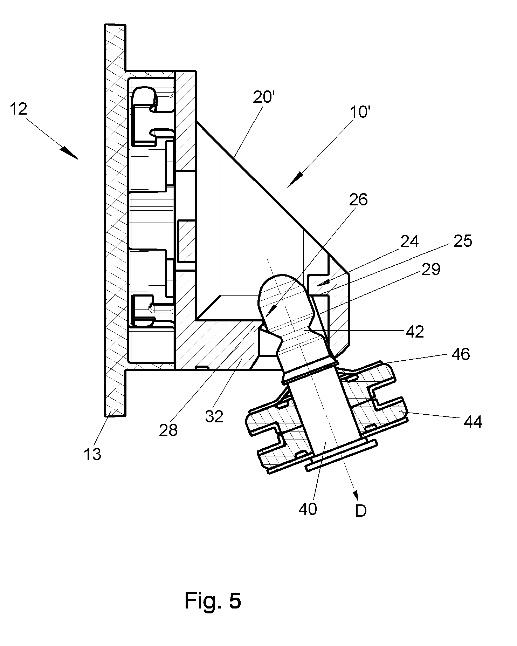

Es wird hier angenommen, dass die als eine Wand dargestellte Struktur 12 senkrecht ist. Es genügt, wenn, wie in Fig. 1 dargestellt, die Öffnung 22 an der oder benachbart zu der Stelle 23 zwei einander gegenüberliegende Randteile hat, zwischen welchen der gemäß der Darstellung in Fig. 4 in der Mittelachse eingeführte Haltebolzen 40 gemäß der Darstellung in Fig. 3 hindurchführbar ist. Ein erster Randteil 24 dieser beiden Randteile kann ein innerer Gehäusevorsprung 25 sein, wie es in den Fig. 1-9 dargestellt ist. Der zweite Randteil 26 kann ein umgebogener freier Endteil eines Federelements 27 sein, wie es in den Fig. 1-4 dargestellt ist, oder ein weiterer Gehäusevorsprung 28 eines Gehäuses 20' bei einer Steckhalterung 10', die als eine weitere Ausführungsform in Fig. 5 gezeigt ist. Unterhalb des Gehäusevorsprungs 25, sind in der Öffnung 22 Führungsrippen 29 ausgebildet, die das Einführen des Haltebolzens 40 in die Öffnung 22 erleichtern. Die Führungsrippen 29 haben zu der Mittelachse M der Öffnung 22 parallele Führungsflächen. Auf der den Führungsrippen 29 gegenüberliegenden Seite weist das Gehäuse 20 einen Gehäusevorsprung 30 auf, welcher den zu dem freien Ende benachbarten Teil des Federelements 27 abstützt. Der Gehäusevorsprung 30 ist weiter so ausgebildet, dass er nach der Montage des Haltebolzens 40 diesen seitlich abstützt, wie es in Fig. 2 gezeigt ist. Der Haltebolzen 40 wird mit einem mit einer Nut 42 versehenen Ende in das Gehäuse 20 eingeführt, um darin selbstständig lösbar verriegelt zu werden, was nun beschrieben wird.

Zur Montage des Bauteils 14 ist bei dem Ausführungsbeispiel nach den Fig. 1-4 der Haltebolzen 40 wahlweise entweder in Richtung der Mittelachse M in die Öffnung 22 einführbar, wie es in den Fig. 3 und 4 gezeigt ist, oder in Richtung der Senkrechten S, wie es in den Fig. 1 und 2 gezeigt ist. Bei dem Einführen des Haltebolzens 40 gemäß den Fig. 3 und 4 bewegt sich das vordere Ende des Haltebolzens 40 zwischen dem ersten Randteil 24 und dem durch das Federelement 27 gebildeten zweiten Randteil 26 hindurch, ohne dass das Federelement 27 ausgelenkt wird. Bei dem Einführen des Haltebolzens 40 gemäß der Darstellung in den Fig. 1 und 2 in Richtung der Senkrechten S wird durch das vordere Ende des Haltebolzens 40 das Federelement 27 nach oben ausgelenkt.

In dem Ausführungsbeispiel nach Fig. 5, in welchem statt des Federelements 27 der feste Gehäusevorsprung 28 vorhanden ist, ist der Haltebolzen 40 nur in der Mittelachse M in das Gehäuse 20 einführbar. Nach dem Einführen des Haltebolzens 40 in die Öffnung 22 in der Mittelachse M (wie in den Fig. 3 und 4) wird der Haltebolzen 40 durch Abstützung an dem ersten Randteil 24 der Öffnung 22, der als Drehpunkt für den Haltebolzen 40 dient, in die Senkrechte S geschwenkt und durch den in die Nut einfassenden zweiten, gegenüberliegenden Randteil 26 der Öffnung 22 verriegelt. Das Verriegeln geschieht bei dem Ausführungsbeispiel nach den Fig. 1 - 4 durch das freie Ende des Federelements 27, hingegen bei dem Ausführungsbeispiel nach Fig. 5 durch den festen Gehäusevorsprung 28. Das Federelement 27 ist eine Blattfeder, deren freies Ende der Querschnittsform der Nut 42 des Haltebolzens 40 angepasst ist. Bei dem Ausführungsbeispiel nach Fig. 5 ist der den zweiten Randteil 26 bildende Gehäusevorsprung 28 der Querschnittsform der Nut 42 des Haltebolzens 40 nur so weit angepasst, dass der Haltebolzen 40 in seiner senkrechten Stellung ausreichend abgestützt wird. Der Gehäusevorsprung 28 könnte in der Querschnittsform mit der Nur 42 auch übereinstimmen. Die Nut 42 ist zwar hier als eine Ringnut dargestellt, es könnte sich aber einfach um eine einseitige Vertiefung in dem Haltebolzen 40 handeln wie in dem eingangs geschilderten Stand der Technik.

Zur Demontage des Bauteils 14 wird der Haltebolzen 40 um den zweiten Randteil 26, also um das freie Ende des Federelements 27 gemäß den Fig. 1-4 oder um den Gehäusevorsprung 28 gemäß Fig. 5 in die Mittelachse M geschwenkt und anschließend aus der Öffnung 22 in der Mittelachse in Richtung D (Fig. 5) nach unten herausgezogen. Das Verriegeln und das Entriegeln des Haltebolzens 40 bei der Montage bzw. Demontage erfolgen somit selbstständig einfach durch entsprechendes Verschwenken des Bauteils 14 gegenüber der Senkrechten S. Das Federelement 27, das bei dem Ausführungsbeispiel nach den Fig. 1-4 den zweiten Randteil 26 bildet, ist so ausgebildet und so in dem Gehäuse 20 befestigt, dass es, wenn es bei der Montage des Bauteils 14 durch dessen in der Senkrechten S in das Gehäuse 20 eingeführten Haltebolzen 40 nach oben ausgelenkt worden ist, anschließend selbsttätig in die Nut 42 einrastet, wie es in Fig. 2 gezeigt ist.

Das Gehäuse 20 ist ein Formteil mit Tragkonsolen 21, die in Halterungen 16 an einer senkrechten Wand 13 der Struktur 12 einrastbar sind, wie es in den Fig. 1-5 gezeigt ist. Stattdessen ist es auch möglich, das Gehäuse 20 mittels Schrauben (nicht dargestellt) an der Struktur 12 zu befestigen. An dem Gehäuse 20 ist unterhalb der Öffnung 22 eine Spannfläche ausgebildet, die mit der Senkrechten S einen rechten Winkel oder einen kleineren Winkel bildet. Auf dem zu dem Einführende des Haltebolzens 40 entgegengesetzten Ende ist ein elastisch federndes Dämpfungselement 44 so angebracht, dass es in der senkrechten Stellung des Haltebolzens 40 (Fig. 2) mit einer Gleitscheibe 46 gegen die Spannfläche 32 drückt.

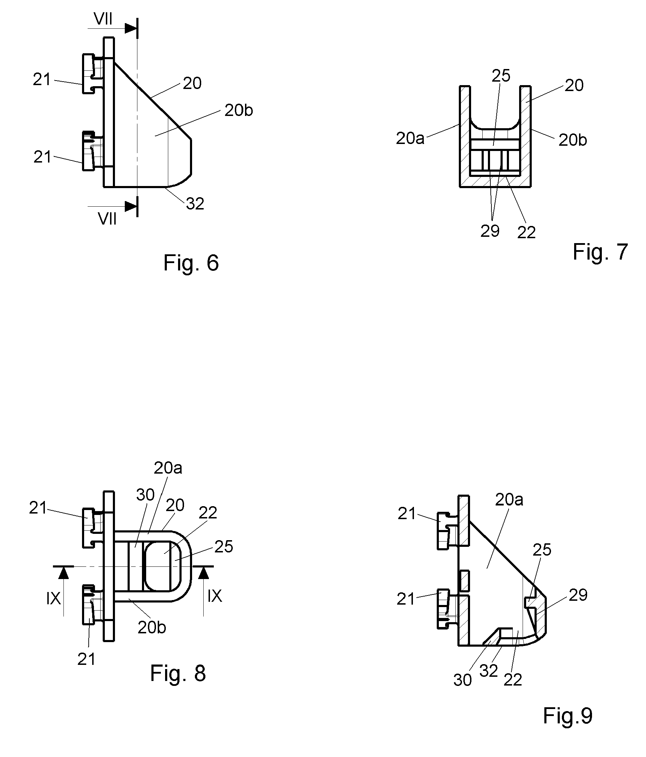

Das Gehäuse 20 der Steckhalterung 10 ermöglicht einen Toleranzausgleich, weil es einen Floatingbereich in X-Richtung besitzt. Das ist in den Fig. 7 und 8 ersichtlich. Die X-Richtung erstreckt sich in Fig. 7 quer zu dem dort in einer Schnittansicht gezeigten Gehäuse 20. Die lichte Weite zwischen den beiden in Fig. 7 einander gegenüberliegenden vertikalen Gehäusewänden ist größer als der Durchmesser des Haltebolzens 40 oder die lichte Weite der Öffnung 22 in Fig. 9, die für das Einführen und Herausziehen des Haltebolzens 40 in der Achse M (dargestellt in Fig. 1) benötigt wird. Das erleichtert das Befestigen des Bauteils 40 an der Struktur 12.

### Bezugszeichenliste

- 10: Steckhalterung
- 12: Struktur
- 13: Wand
- 14: Bauteil
- 16: Halterung
- 20: Gehäuse
- 20a: Seitenwand
- 20b: Seitenwand
- 21: Tragkonsole
- 22: Öffnung
- 23: Stelle kleinster lichter Weite
- 24: erster Randteil
- 25: Gehäusevorsprung
- 26: zweiter Randteil
- 27: Federelement
- 28: Gehäusevorsprung
- 29: Führungsrippen
- 30: Gehäusevorsprung
- 32: Spannfläche
- 40: Haltebolzen
- 42: Nut
- 44: Dämpfungselement
- 46: Gleitscheibe

- M: Mittelachse
- S: Senkrechte
- β: spitzer Winkel
- D: Demontagerichtung

## Patentansprüche

1. Steckhalterung (10) für einen oberen Befestigungspunkt eines an einer festen Struktur (12) wie der eines Flugzeuges hängend montierbaren Bauteils (14),
mit einem Gehäuse (20) mit einer Öffnung (22), die eine Mittelachse (M) hat, und
mit einem Haltebolzen (40) des Bauteils (14) mit einem mit einer Nut (42) versehenen Ende, das in das Gehäuse (20) einführbar und darin lösbar verriegelbar ist,
**dadurch gekennzeichnet, dass** die Öffnung (22) schräg in dem Gehäuse (20) unter einem spitzen Winkel (β) gegen die Senkrechte (S) angeordnet und so ausgebildet ist, dass zur Montage des Bauteils (14) der Haltebolzen (40) wenigstens in Richtung der Mittelachse (M) in die Öffnung (22) einführbar und durch Abstützung an einem ersten Randteil (24) der Öffnung (22) in die Senkrechte (S) schwenkbar ist zum Verriegeln des Haltebolzens (40) durch einen in die Nut (42) einfassenden zweiten, gegenüberliegenden Randteil (26) der Öffnung (22) und dass zur Demontage des Bauteils (14) der Haltebolzen (40) um den zweiten Randteil (26) in die Mittelachse (M) schwenkbar und dann aus der Öffnung (22) herausziehbar ist.

2. Steckhalterung nach Anspruch 1, **dadurch gekennzeichnet, dass** der zweite Randteil (26) ein Federelement (27) aufweist, das so ausgebildet und so in dem Gehäuse (20) befestigt ist, dass es bei der Montage des Bauteils (14) durch dessen in der Senkrechten (S) statt in der Mittelachse (M) in das Gehäuse (20) eingeführten Haltebolzen (40) auslenkbar ist, um schließlich in die Nut (42) einzurasten.

3. Steckhalterung nach Anspruch 1, **dadurch gekennzeichnet, dass** der zweite Randteil (26) des Gehäuses (20) der Querschnittsform der Nut (42) des Haltebolzens (40) angepasst ist.

4. Steckhalterung nach Anspruch 2, **dadurch gekennzeichnet, dass** das Federelement (27) eine Blattfeder ist, deren freies Ende der Querschnittsform der Nut (42) des Haltebolzens (40) angepasst ist.

5. Steckhalterung nach Anspruch 2 oder 4, **dadurch gekennzeichnet, dass** sich das Federelement (27) auf der Seite der Öffnung (22), auf der der Haltebolzen (40) bei der Montage eingeführt wird, auf einem Gehäusevorsprung (30) abstützt, der weiter so ausgebildet ist, dass er nach der Montage des Haltebolzens (40) diesen seitlich abstützt.

6. Steckhalterung nach einem der vorhergehenden Ansprüche, **dadurch gekennzeichnet, dass** der spitze Winkel (β) bis zu 20° beträgt.

7. Steckhalterung nach einem der vorhergehenden Ansprüche, **dadurch gekennzeichnet, dass** das Gehäuse (20) ein Formteil ist, das mittels Schrauben oder mittels Tragkonsolen (21), die in Halterungen (16) an einer senkrechten Wand (13) der Struktur (12) einrastbar sind, an der Struktur (12) lösbar befestigbar oder befestigt ist.

8. Steckhalterung nach einem der vorhergehenden Ansprüche, **dadurch gekennzeichnet, dass** an dem Gehäuse (20) unterhalb der Öffnung (22) eine Spannfläche (32) ausgebildet ist, die mit der Senkrechten (S) einen rechten Winkel oder einen kleineren Winkel bildet.

9. Steckhalterung nach Anspruch 8, **dadurch gekennzeichnet, dass** auf dem anderen Ende des Haltebolzens (40) ein elastisch federndes Dämpfungselement (44) so angebracht ist, dass es in der verriegelten senkrechten Stellung des Haltebolzens (40) gegen die Spannfläche (32) drückt.

10. Steckhalterung nach einem der vorhergehenden Ansprüche, **dadurch gekennzeichnet, dass** die lichte Weite des Gehäuses (20) zwischen seinen beiden einander gegenüberliegenden Seitenwänden (20a, 20b) grö-βer ist als der Außendurchmesser des Haltebolzens (40).

## Claims

1. Push-in mounting (10) for an upper fastening point of a component (14) which can be mounted in a suspended manner on a fixed structure (12) such as that of an aircraft, comprising a housing (20) which has an opening (22) which has a central axis (M), and comprising a retaining pin (40) of the component (14) having an end provided with a groove (42) which can be introduced into the housing (20) and releasably locked therein, **characterised in that** the opening (22) is arranged obliquely in the housing (20) at an acute angle (β) to the vertical line (S) and is configured in such a way that in order to assemble the component (14), the retaining pin (40) can be introduced into the opening (22) at least in the direction of the central axis (M) and, by being supported on a first edge portion (24) of the opening (22), can be pivoted into the vertical line (S) in order to lock the retaining pin (40) by means of a second, opposite edge portion (26) of the opening (22) which encloses in the groove (42), and in such a way that in order to disassemble the component (14), the retaining pin (40) can be pivoted about the second edge portion (26) into the central axis (M) and then pulled out of the opening (22).

2. Push-in mounting according to claim 1, **characterised in that** the second edge portion (26) comprises a spring element (27) which is configured and attached in the housing (20) in such a way that when the component (14) is assembled, said element can be deflected by means of the retaining pin (40) of said component, which bolt is introduced into the housing (20) in the vertical line (S) instead of in the central axis (M), to finally engage in the groove (42).

3. Push-in mounting according to claim 1, **characterised in that** the second edge portion (26) of the housing (20) is adapted to the cross-sectional shape of the groove (42) of the retaining pin (40).

4. Push-in mounting according to claim 2, **characterised in that** the spring element (27) is a leaf spring, the free end of which is adapted to the cross-sectional shape of the groove (42) of the retaining pin (40).

5. Push-in mounting according to either claim 2 or claim 4, **characterised in that** the spring element (27) is supported on a housing projection (30) on the side of the opening (22) on which the retaining pin (40) is introduced during the assembly, which projection is additionally configured in such a way that it laterally supports the retaining pin (40) after the assembly thereof.

6. Push-in mounting according to any of the preceding claims, **characterised in that** the acute angle (β) is up to 20°.

7. Push-in mounting according to any of the preceding claims, **characterised in that** the housing (20) is a moulded part which is or can be detachably attached to the structure (12) by means of screws or by means of supporting brackets (21) which can engage in mountings (16) on a vertical wall (13) of the structure (12).

8. Push-in mounting according to any of the preceding claims, **characterised in that** a clamping face (32) is formed on the housing (20) underneath the opening (22), which face is at a right angle or a smaller angle to the vertical line (S).

9. Push-in mounting according to claim 8, **characterised in that** a resilient damping element (44) is attached to the other end of the retaining pin (40) in such a way that it presses against the clamping face (32) in the locked vertical position of the retaining pin (40).

10. Push-in mounting according to any of the preceding claims, **characterised in that** the clear width of the housing (20) between the two mutually opposing lateral walls (20a, 20b) thereof is greater than the external diameter of the retaining pin (40).

## Revendications

1. Support enfichable (10) pour un point de fixation supérieur d'un élément (14) pouvant être suspendu à une structure rigide (12) par exemple d'un avion, comportant :
un boîtier (20) muni une ouverture (22) comprenant un axe médian (M), et
un goujon de retenue (40) de l'élément (14) ayant une extrémité équipée d'une rainure (42) pouvant être introduite dans le boîtier (20) et verrouillée de façon amovible dans ce boîtier,
**caractérisé en ce que**
l'ouverture (22) est positionnée obliquement dans le boitier (20) sous un angle aigu (β) par rapport à la verticale (S) et est conformée de sorte que pour permettre le montage de l'élément (14), le goujon de retenue (40) puisse être introduit au moins en direction de l'axe médian (M) dans l'ouverture (22), et puisse pivoter à la verticale (S) en s'appuyant sur une première partie de bord (24) de l'ouverture (22), pour verrouiller le goujon de retenue (40) par une seconde partie de bord (26) de l'ouverture (22) située à l'opposé s'enchâssant dans la rainure (42) et que pour permettre le démontage de l'élément (14) le goujon de retenue (40) puisse pivoter autour de la seconde partie de bord (26) dans l'axe médian (M) puis être extrait de l'ouverture (22).

2. Support enfichable conforme à la revendication 1,
**caractérisé en ce que**
la seconde partie de bord (26) comporte un élément élastique (27) qui est réalisé et fixé dans le boîtier (20) de sorte que lors du montage de l'élément (14) il puisse être dévié par son goujon de retenue (40) introduit dans le boîtier (20) à la verticale (S) et non dans l'axe médian (M) pour s'encliqueter ensuite dans la rainure (42).

3. Support enfichable conforme à la revendication 1,
**caractérisé en ce que**
la seconde partie de bord (26) du boîtier (20) est adaptée à la forme de la section de la rainure (42) du goujon de retenue (40).

4. Support enfichable conforme à la revendication 2,
**caractérisé en ce que**
l'élément élastique (27) est un ressort à lame dont l'extrémité libre est adaptée à la forme de la section de la rainure (42) du goujon de retenue (40).

5. Support enfichable conforme à la revendication 2 ou 4,
**caractérisé en ce que**
l'élément élastique (27) s'appuie du côté de l'ouverture (22) sur lequel est introduit le goujon de retenue (40) lors du montage sur une saillie (30) du boîtier et qui est en outre réalisée de sorte qu'après le montage du goujon de retenue (40) elle soutienne latéralement celui-ci.

6. Support enfichable conforme à une des revendications précédentes,
**caractérisé en ce que**
la valeur de l'angle aigu (β) peut aller jusqu'à 20°.

7. Support enfichable conforme à l'une des revendications précédentes,
**caractérisé en ce que**
le boîtier (20) est une partie moulée qui est fixée ou peut être fixée de façon amovible sur la structure (12) au moyen de vis ou de consoles support (21) qui peuvent être enclipsées dans des éléments de retenue (16) positionnés sur une paroi verticale (13) de la structure (12).

8. Support enfichable conforme à l'une des revendications précédentes,
**caractérisé en ce que**
sur le boîtier (20) et au-dessous de l'ouverture (22) est formée une surface de serrage (32) qui forme avec la verticale (S) un angle droit ou un angle inférieur.

9. Support enfichable conforme à la revendication 8,
**caractérisé en ce que**
sur l'autre extrémité du goujon de retenue (40) est monté un élément d'amortissement ayant l'élasticité d'un ressort (44) de sorte qu'il exerce une pression sur la surface de serrage (32) lorsque le goujon de retenue (40) est dans la position verticale verrouillée.

10. Support enfichable conforme à l'une des revendications précédentes,
**caractérisé en ce que**
la largeur intérieure du boîtier (20) entre ses deux parois latérales (20a, 20b) situées à l'opposé l'une de l'autre est supérieure au diamètre externe du goujon de retenue (40).
